# EUROPEAN PATENT APPLICATION

(11) **EP 2 322 979 A1**
(43) Date of publication of application: **18.05.2011**
(21) Application number: 09808040.1
(22) Date of filing: 11.08.2009
(51) Int. Cl.: G02F 1/1335, G02F 1/1343

(54) **LIQUID CRYSTAL DISPLAY DEVICE**

(30) Priority: 19.08.2008 JP 2008211004
(71) Applicant: Sharp Kabushiki Kaisha, Osaka-shi, Osaka 545-8522 (JP)
(72) Inventor: YANAGAWA, Risuke, Osaka-shi Osaka 545-8522 (JP)
(74) Representative: Müller - Hoffmann & Partner
(86) International application number: PCT/JP2009/003854
(87) International publication number: WO 2010/021104

(57) **Abstract**

A liquid crystal display device **(100)** according to the present invention includes: a first substrate **(110)** having a first electrode **(114);** a second substrate **(120)** having a second electrode **(124);** and a liquid crystal layer **(130)** provided between the first electrode **(114)** and the second electrode **(124).** The first electrode **(114)** includes a plurality of metal wires **(114m)** extending linearly and in parallel to one another. Preferably, the first electrode **(114)** further includes an outer edge portion **(114s)** which is continuous with each of the plurality of metal wires **(114m).**

## Description

### TECHNICAL FIELD

The present invention relates to a liquid crystal display device.

### BACKGROUND ART

Liquid crystal display devices have advantages such as light weight, thinness, and low power consumption, and are utilized for the display sections of television sets, computers, mobile terminals, and the like. A generic liquid crystal display device includes two polarizing plates which oppose each other with a liquid crystal layer interposed therebetween, such that the luminance of each pixel changes through adjustment of a voltage applied across the liquid crystal layer.

Commonly-used polarizing plates are formed by, after allowing dichroic iodine to be adsorbed onto a polyvinyl alcohol (PVA) film, drawing it in one direction in order to align the molecules in one orientation. A polarizing plate transmits a polarization component having a polarization direction which is parallel to the transmission axis, and absorbs a polarization component having a polarization direction which is orthogonal to the transmission axis. Such a polarizing plate does not have sufficient thermal resistance, and may deteriorate with ultraviolet.

As another type of polarizing plate, wire grids are known, which have excellent thermal resistance (see Patent Documents 1 to 3). A wire grid has a plurality of metal wires arranged at an equal interval, and a polarization component whose polarization direction is perpendicular to the direction that the metal wires extend (longitudinal direction) is transmitted through the wire grid, whereas a polarization component whose polarization direction is parallel to the longitudinal direction of the metal wires is reflected by the wire grid.

FIG. 8 shows a schematic diagram of a liquid crystal display device **700** disclosed in Patent Document 1. A liquid crystal panel **705** of the liquid crystal display device **700** includes transparent substrates **712** and **722** and a liquid crystal layer **730** provided between the transparent substrate **712** and the transparent substrate **722.** On the inside of the transparent substrate **712,** electrodes, an alignment film, and the like (not shown) are provided, whereas metal wires **742** are provided on the outside of the transparent substrate **712.** A wire grid **740** functioning as a polarizer is composed of the transparent substrate **712** and the metal wires **742.** On the inside of the transparent substrate **722,** electrodes, an alignment film, and the like (not shown) are provided, whereas a polarizing plate **750** is provided on the outside of the transparent substrate **722.**

Light going out from a fluorescent lamp **762** is diffused by a white scattering plate **764,** and thereafter its diffusion angle is constricted by a bead scattering plate **766.** A prism sheet **768** restricts light so as to be within a specific angle. Such light enters the wire grid **740.** Within this light, a polarization component whose polarization direction is perpendicular to the direction (longitudinal direction) that the metal wires **742** extend is transmitted through the wire grid **740.** Note that the transmission axis of the wire grid **740** is disposed orthogonal to the transmission axis of the polarizing plate **750.** The liquid crystal display device **700** is of a normally black mode, such that linearly polarized light which is transmitted through the wire grid **740** has its polarization direction rotated when a pixel is in an OFF displaying state, whereby the color of that pixel is exhibited through the polarizing plate **750.** On the other hand, when a pixel is in an ON displaying state, the polarization direction is kept intact and thus receives blocking by the polarizing plate **750,** whereby black is displayed.

On the other hand, a polarization component whose polarization direction is parallel to the direction that the metal wires **742** extend is reflected by the wire grid **740.** As the component reflected by the wire grid **740** is reflected by the scattering plates **766** and **764** and a reflector (not shown) which is provided near the fluorescent lamp **762,** it undergoes a change in polarization state, and thus enters the wire grid **740** again. Within the light entering the wire grid **740** again, the component whose polarization direction is perpendicular to the direction that the metal wires **742** extend is transmitted through the wire grid **740.** Theoretically, such transmission and reflection are repeated an infinite number of times. In the liquid crystal display device **700,** most of the light which has been emitted from the fluorescent lamp **762** is finally transmitted through the wire grid **740** via such optical paths. Therefore, the efficiency of light utilization is considerably increased, thus enabling bright displaying with a small power.

However, generally speaking, electrically conductive members such as electrodes and wiring lines and an alignment film and the like are provided on the inside.of the transparent substrate **712,** and an increase in cost would be induced by separately attaching the metal wires **742** on the outside of the transparent substrate **712,** for example. Therefore, a possibility of forming the wire grid on the inside of the transparent substrate together with the other members has been studied (see Patent Documents 2 and 3).

FIG. **9** shows a schematic diagram of a liquid crystal display device **800** disclosed in Patent Document 2. The liquid crystal display device **800** includes a TFT substrate **810,** a counter substrate **820,** and a liquid crystal layer **830** provided between the TFT substrate **810** and the counter substrate **820.** On the counter substrate **820** has a microlens array **823** including a quartz substrate **822** and lens portions **823a.** Moreover, the counter substrate **820** has a wire grid **840** including the lens portions **823a** and grid portions **842.** Thus, the wire grid **840** is integrated with the microlens array **823.** Moreover, a counter electrode **824** is provided on the wire grid **840** and a light shielding film **825.**

FIG. **10** shows a schematic diagram of a liquid crystal display device **900** disclosed in Patent Document 3. The liquid crystal display device **900** includes a transparent substrate **912,** a transparent substrate **922,** and a liquid crystal layer **930** provided between the transparent substrate **912** and the transparent substrate **922.** A wire grid **940** is provided on pixel electrodes **914.** The wire grid **940** has regions **940a** and **940b** in which metal wires extend in directions which are 90° apart. In the liquid crystal display device **900,** the wire grid **940** is formed after forming the pixel electrodes **914** by a known method. The pixel electrodes **914** are formed by depositing a transparent electrically conductive material and thereafter patterning it, for example. Thereafter, the wire grid **940** is formed by vapor-depositing chromium on the pixel electrodes **914** and patterning it in the form of a grating.

Moreover, a wire grid **950** is provided on a counter electrode **924.** The wire grid **950** has regions **950a** and **950b** in which metal wires extend in directions which are 90° apart. The regions **950a** of the wire grid **950** oppose the regions **940a** of the wire grid **940,** such that the directions in which the metal wires extend differ by 90° between the regions **940a** and **950a,** and similarly, the regions **950b** of the wire grid **950** oppose the regions **940b** of the wire grid **940,** such that the directions in which the metal wires extend differ by 90° between the regions **940b** and **950b.** The counter electrode **924** is formed by depositing a transparent electrically conductive material and thereafter patterning it, for example. By subsequently vapor-depositing chromium on the counter electrode **924** and patterning it in the form of a grating, the wire grid **950** is formed.

### CITATION LIST

### PATENT LITERATURE

[Patent Document 1] Japanese Laid-Open Patent Publication No. 2006-47829
[Patent Document 2] Japanese Laid-Open Patent Publication No. 2007-171802
[Patent Document 3] Japanese Laid-Open Patent Publication No. 9-160013

### SUMMARY OF INVENTION

### TECHNICAL PROBLEM

In the liquid crystal display device **800** of Patent Document 2, after forming the wire grid **840** functioning as a polarizer, the counter electrode **824** must be separately formed. In the liquid crystal display device **900** of Patent Document 3, after forming the pixel electrodes **914** and the counter electrode **924,** the wire grids **940** and **950** must be separately formed.

The present invention has been made in view of the above problems, and an objective thereof is to provide a liquid crystal display device which can be easily produced.

### SOLUTION TO PROBLEM

A liquid crystal display device according to the present invention is a liquid crystal display device comprising: a first substrate having a first electrode; a second substrate having a second electrode; and a liquid crystal layer provided between the first electrode and the second electrode, wherein, at least one of the first electrode and the second electrode includes a plurality of metal wires extending linearly and in parallel to one another.

In one embodiment, the at least one electrode further includes an outer edge portion which is continuous with each of the plurality of metal wires.

In one embodiment, the plurality of metal wires have a pitch of 300 nm or less; a ratio of a width of the plurality of metal wires to the pitch of the plurality of metal wires is in the range from 0.1 to 0.75; and the plurality of metal wires have a height in the range from 50 nm to 500 nm.

In one embodiment, each of the first electrode and the second electrode includes a plurality of metal wires extending linearly and in parallel to one another.

In one embodiment, a direction that the plurality of metal wires of the first electrode extend is orthogonal to a direction that the plurality of metal wires of the second electrode extend.

### ADVANTAGEOUS EFFECTS OF INVENTION

According to the present invention, a liquid crystal display device which can be easily produced is provided.

### BRIEF DESCRIPTION OF DRAWINGS

[FIG. **1**] A schematic diagram showing an embodiment of a liquid crystal display device according to the present invention.
[FIG. **2**] **(a)** is a schematic perspective view of an active matrix substrate of the liquid crystal display device shown in FIG. 1, and **(b)** is a schematic cross-sectional view of the active matrix substrate of the liquid crystal display device shown in FIG. 1.
[FIG. **3**] **(a)** is a schematic diagram showing another embodiment of the liquid crystal display device according to the present invention; **(b)** is a schematic plan view of a counter electrode of the liquid crystal display device shown in **(a);** and **(c)** is a schematic plan view of the counter electrode in another form.
[FIG. **4**] **(a)** is a schematic diagram showing another embodiment of the liquid crystal display device according to the present invention; **(b)** is a schematic plan view of pixel electrodes of the liquid crystal display device shown in **(a);** and (c) is a schematic plan view of a counter electrode of the liquid crystal display device shown in **(a).**
[FIG. **5**] A schematic diagram showing the liquid crystal display device shown in FIG. **4****.**
[FIG. **6**] A schematic diagram showing another embodiment of the liquid crystal display device according to the present invention, where **(a)** is a schematic diagram showing a pixel electrode; **(b)** is a schematic diagram showing a counter electrode; and **(c)** is a schematic diagram showing reference orientation azimuth directions of liquid crystal domains.
[FIG. 7] A schematic diagram showing another embodiment of the liquid crystal display device according to the present invention.
[FIG. **8**] A schematic diagram showing a conventional liquid crystal display device.

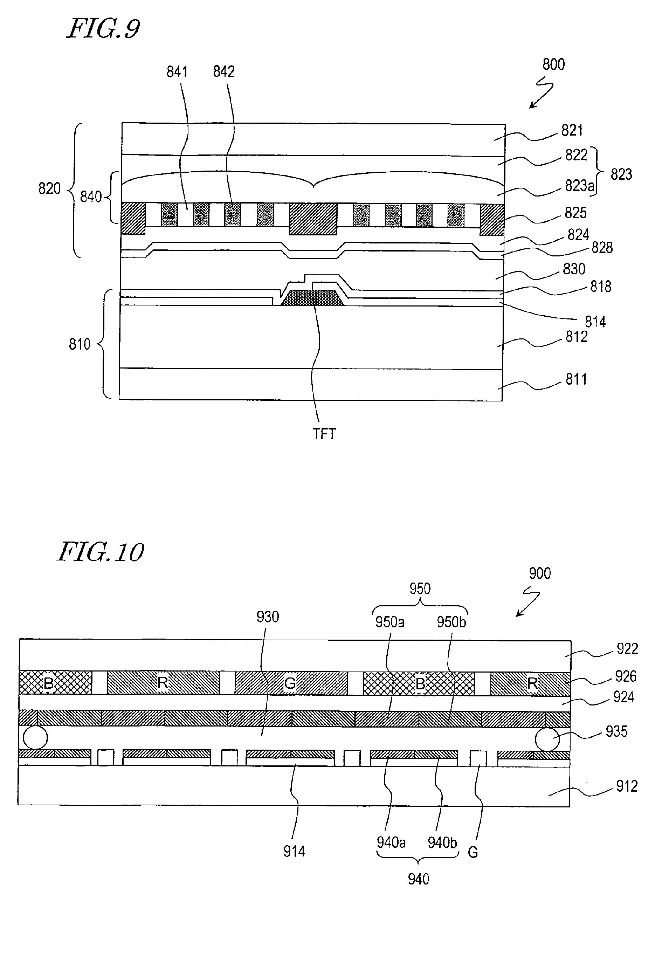

[FIG. **9**] A schematic diagram showing a conventional liquid crystal display device.
[FIG. **10****]** A schematic diagram showing a conventional liquid crystal display device.

### DESCRIPTION OF EMBODIMENTS

Hereinafter, with reference to the drawings, embodiments of the liquid crystal display device according to the present invention and the production method thereof will be described. However, the present invention is not limited to the following embodiments.

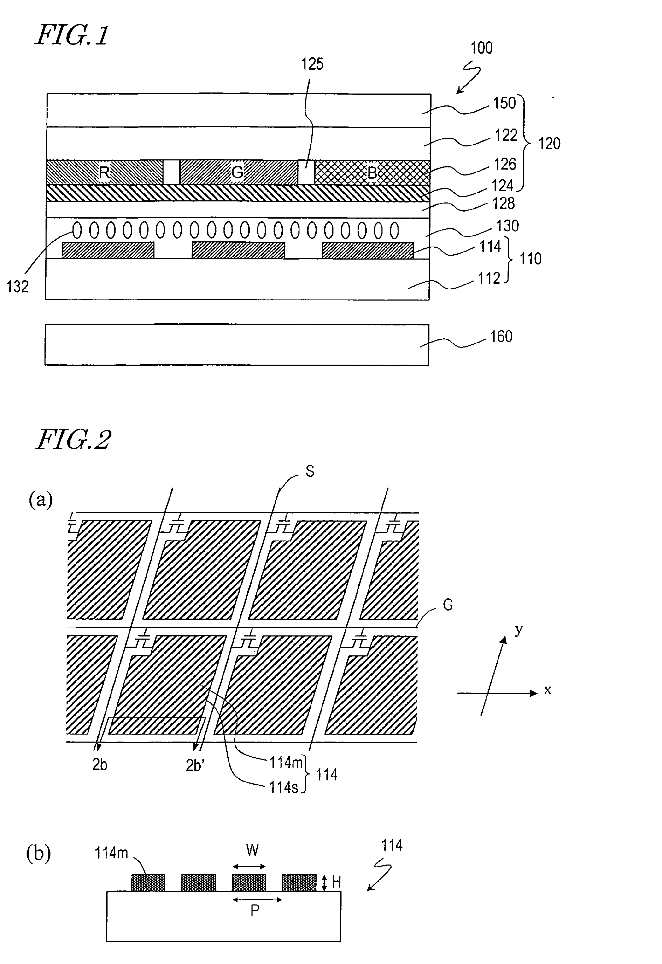

With reference to FIG. **1** and FIG. **2****,** an embodiment of the liquid crystal display device according to the present invention will be described. FIG. **1** shows a schematic diagram of the liquid crystal display device **100** of the present embodiment. The liquid crystal display device **100** includes a first substrate **110** having first electrodes **114** provided on an insulative substrate **112,** a second substrate **120** having a second electrode **124** provided on an insulative substrate **122,** and a liquid crystal layer **130** provided between the first electrodes **114** and the second electrode **124.** The liquid crystal display device **100** further includes a backlight **160.** On the outside of the insulative substrate **122** of the second substrate **120,** a polarizing plate **150** is provided. The polarizing plate **150** is an iodine-type polarizing plate. The insulative substrates **112** and **122** are transparent glass substrates, for example. The liquid crystal display device **100** is a transmission type or a transmission/reflection combination type.

Herein, the first substrate **110** is an active matrix substrate (TFT substrate), and the first electrodes **114** are pixel electrodes. Although not shown in FIG. 1, wiring lines, switching elements (e.g., thin film transistors (TFTs)), and the like are provided on the insulative substrate **112.** Herein, the second substrate **120** is a counter substrate, and the second electrode **124** is a counter electrode. On the insulative substrate **122,** a black matrix **125,** a color filter layer **126,** and an alignment film **128** are provided. In the following description, the first electrodes **114** may be referred to as the pixel electrodes **114,** whereas the second electrode **124** may be referred to as the counter electrode **124.**

In the liquid crystal display device **100,** pixels which are arranged in a matrix array of a plurality of rows and a plurality of columns are provided. The pixels are defined by the pixel electrodes **114,** and the pixel electrodes **114** are arrayed in x and y directions.

FIG. **2(a)** shows a schematic perspective view of the active matrix substrate **110** of the liquid crystal display device **100,** and FIG. **2(b)** shows a schematic cross-sectional view of the active matrix substrate **110** of the liquid crystal display device **100.** FIG. **2(b)** corresponds to a cross section along line **2b-2b'** in FIG. 2(a).

Each pixel electrode **114** is surrounded by two gate lines **G** and two source lines **S.** A gate of each TFT **115** is electrically connected to a gate line **G,** whereas a source of each TFT **115** is electrically connected to a source line **S.** Moreover, a drain of each TFT **115** is electrically connected to a pixel electrode **114.** For example, the length of a pixel electrode **114** along the x direction is 63.5 µm, and its length along the y direction is 190.5 µm.

Each pixel electrode **114** includes a plurality of metal wires **114m** extending linearly and in parallel to one another. The metal wires **114m** are made of a metal material, e.g., aluminum. Alternatively, the metal wires **114m** may be made of gold, silver, or copper. Thus, it is preferable that the metal wires **114m** are made of a material showing a high electrical mobility and a high surface reflection rate. The plurality of metal wires **114m** are electrically connected. The pixel electrodes **114** have an outer edge portion **114s** which is continuous with the plurality of metal wires **114m.** The outer edge portion **114s** surrounds the metal wires **114m,** and defines an outer edge of the pixel electrode **114.** The outer edge portion **114s** is made of the same material as the metal wires **114m.**

The potentials of the plurality of metal wires **114m** within one pixel electrode **114** are equivalent with one another. A pitch **P** of the metal wires **114m** is 300 nm or less; a ratio (W/P) of a width **W** of the metal wires **114m** to the pitch **P** of the metal wires **114m** is in the range from 0.1 to 0.75; and a height **H** of the metal wires **114m** is in the range from 50 nm to 500 nm. So long as the fabrication limits permit, it is preferable that the pitch of the metal wires **114m** is as small as possible. For example, the pitch **P,** the width **W,** and the height **H** of the metal wires **114m** are 200 nm, 50 nm, and 100 nm, respectively.

The pixel electrodes **114** have a wire grid structure, so that the pixel electrodes **114** function as a polarizer. A polarization component whose polarization direction is orthogonal to the direction that the metal wires **114m** extend is transmitted through the pixel electrodes **114,** whereas a polarization component whose polarization direction is parallel to the direction that the metal wires **114m** extend is reflected by the pixel electrodes **114.** Note that the transmittance (parallel transmittance, single transmittance) of the pixel electrodes **114** is no less than 10% and no more than 75%, whereas the reflectance of the pixel electrodes **114** is no less than 25% and no more than 90%. Thus, the pixel electrodes **114** have transmission axes which are orthogonal to the direction that the metal wires **114m** extend. The pixel electrodes **114** are formed by depositing a metal material and thereafter patterning it. Moreover, the pixel electrodes **114** may be formed by a nanoimprint technique, a double beam interference exposure technique, or the like.

From a microscopic point of view, it might seem that an oblique electric field would occur because recesses are formed in the pixel electrodes **114.** However, in actuality, the recesses of the pixel electrodes **114** are sufficiently small relative to the liquid crystal molecules **132,** and therefore no oblique electric field that defines the orientation directions of the liquid crystal molecules **132** will substantially occur. If any oblique electric field occurs that defines the orientation directions of the liquid crystal molecules **132,** it will cause disclination, and thus an alignment film (not shown in FIG. 1) should preferably be formed on the metal wires **114m.**

Moreover, the counter electrode **124** has a flat surface, and opposes each of the plurality of pixel electrodes **114.** Note that the counter electrode **124** is made of a transparent electrically conductive material, e.g., indium tin oxide (ITO).

In the liquid crystal display device **100** of the present embodiment, the pixel electrodes **114** functioning as a polarizer are provided on the inside of the insulative substrate **112.** Therefore, there is no need to separately provide a polarizing plate in addition to the pixel electrodes **114,** and there is no need to attach a polarizing plate on the outside of the insulative substrate **112.** Moreover, since the distance between the pixel electrodes **114** having a wire grid structure and the polarizing plate **150** is short and there are few members between the pixel electrodes **114** and the polarizing plate **150,** fluctuations in the polarization state of light traveling through the polarizer can be suppressed, whereby the transmittance and contrast ratio can be improved.

Moreover, as described above, the liquid crystal display device **100** is of a transmission type or a transmission/reflection combination type, and the liquid crystal display device **100** includes the backlight **160.** Therefore, light which is reflected by the metal wires **114m** is reflected by the backlight **160** toward the metal wires **114m,** thus improving the efficiency of light utilization.

Thus, since the pixel electrodes **114** of the active matrix substrate **110** function as a polarizer, there is no need to separately provide a polarizing plate on the active matrix substrate **110** in addition to the pixel electrodes **114.** The fact that the pixel electrodes **114** have the metal wires **114m** can be confirmed by using a microscope.

Note that the polarizing plate **150** is disposed so that its transmission axis is parallel to the direction that the metal wires **114m** of the pixel electrodes **114** extend. As described above, the transmission axes of the pixel electrodes **114** functioning as a polarizer are in a direction which is orthogonal to the direction that the metal wires **114m** extend, and the transmission axes of the pixel electrodes **114** are in crossed Nicols relationship with the transmission axis of the polarizing plate **150.**

The metal wires **114m** of the pixel electrodes **114** as such are formed by patterning. Generally speaking, pixel electrodes are formed by depositing a transparent electrically conductive material and thereafter conducting a patterning through etching away the portions between adjoining pixel electrodes, etc. During this patterning, by removing the oblique linear portions within the outer edge portion **114s** while leaving the outer edge portion **114s,** mutually isolated metal wires **114m** can be formed in the pixel electrodes **114** of the liquid crystal display device **100** of the present embodiment. Thus, the pixel electrodes **114** can be formed without particularly complicating the formation steps of the pixel electrode, thereby making it possible to omit a step of forming or a step of attaching a polarizing plate.

The liquid crystal display device **100** operates in the TN (Twisted Nematic) mode, and the liquid crystal layer **130** contains a liquid crystal material having a positive anisotropy of dielectric constant. In the case where the pitch of the metal wires **114m** is small, in the absence of an applied voltage, the liquid crystal molecules **132** near the pixel electrodes **114** are oriented in parallel to the direction that the metal wires **114m** of the pixel electrodes **114** extend. Thus, the pixel electrodes **114** function also as an alignment film. Note that the direction that the metal wires **114m** extend intersects the x direction and the y direction at 45°. Moreover, the alignment film **128** is subjected to an alignment treatment in a direction which is orthogonal to the direction that the metal wires **124m** extend. The alignment treatment is a rubbing treatment or a photo-alignment treatment, for example.

In the case where the voltage applied to the liquid crystal layer **130** is low, the liquid crystal molecules **132** near the alignment film **128** are oriented in parallel to the alignment treatment direction of the alignment film **128,** whereas the liquid crystal molecules **132** near the pixel electrodes **114** are oriented in parallel to the direction that the metal wires **114m** of the pixel electrodes **114** extend. Therefore, the liquid crystal molecules **132** take a twist alignment. In the case where the voltage applied to the liquid crystal layer **130** is high, the liquid crystal molecules **132** are oriented substantially in parallel to the normal directions of the principal faces of the pixel electrodes **114** and the alignment film **128.**

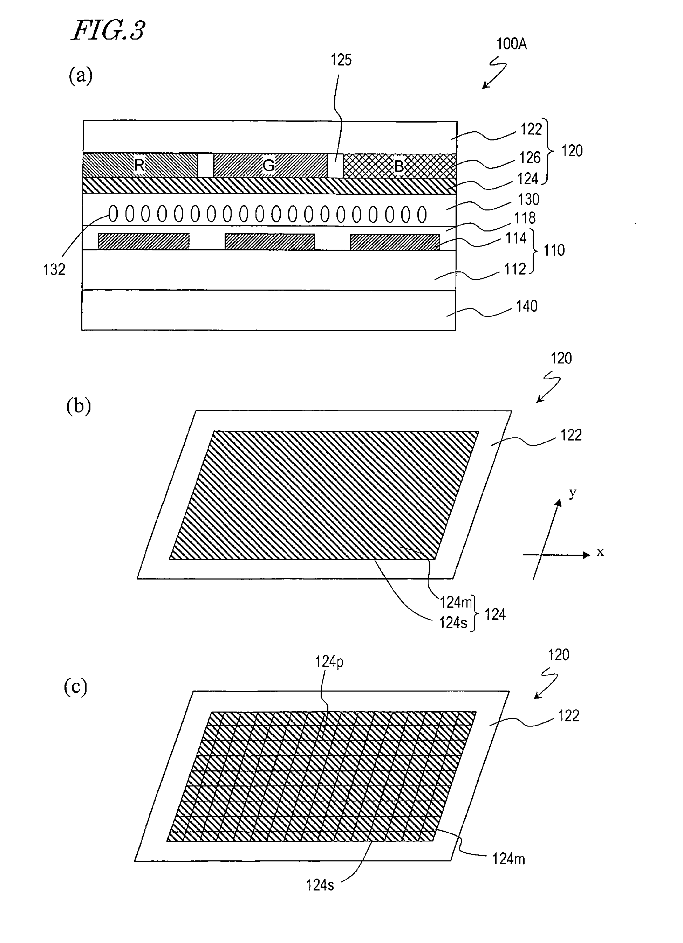

Although the above description illustrates that the pixel electrodes **114** include the metal wires **114m,** the present invention is not limited thereto. The counter electrode **124** may include a plurality of metal wires extending linearly and in parallel to one another. With reference to FIG. **3****,** a liquid crystal display device **100A** will be described. FIG. **3(a)** shows a schematic diagram of the liquid crystal display device **100A,** and FIG. **3(b)** shows a schematic plan view of a counter electrode **124** of the liquid crystal display device **100A.**

In the liquid crystal display device **100A,** the counter electrode **124** includes a plurality of metal wires **124m** extending linearly and in parallel to one another, and an outer edge portion **124s** which is continuous with the metal wires **124m.** The pitch, width, and height of the metal wires **124m** are 200 nm, 50 nm, and 100 nm, for example. The outer edge portion **124s** is provided so as to correspond to the outer edge of the display region of the liquid crystal display device **100A.**

Alternatively, as shown in FIG. **3(c)****,** the metal wires **124m** of the counter electrode **124** of the liquid crystal display device **100A** may be made continuous not only via the outer edge portion **124s** but also via pixel outer edge portions **124p** which are provided corresponding to the pixel electrodes **114.** In the case where there is a large influence of oblique electric fields due to the wiring lines of the pixel outer edge portions **124p,** such influence can be suppressed by adopting the construction shown in FIG. **3(b)****.** On the other hand, when there are relatively frequent instances of wire breaking, adopting the construction shown in FIG. **3(c)** makes it possible to supply a counter signal to broken wires via the pixel outer edge portions **124p,** thus improving the production yield.

An alignment film **118** and a polarizing plate **140** are provided on the insulative substrate **112** of the liquid crystal display device **100A,** such that the transmission axis of the polarizing plate **140** is parallel to the direction that the metal wires **124m** of the counter electrode **124** extend. Note that the liquid crystal display device **100A** may be a transmission type or a transmission/reflection combination type, or alternatively a reflection type.

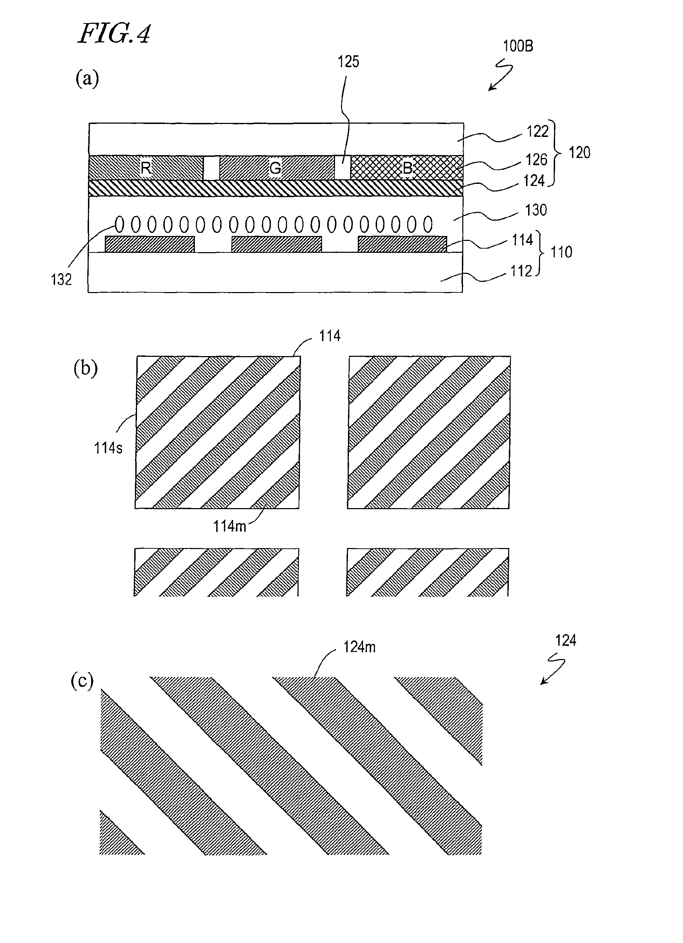

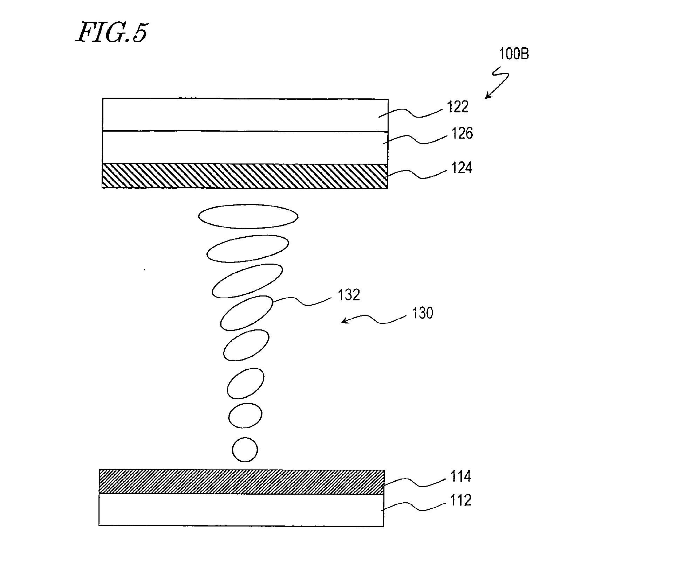

Although the above description illustrates that either the pixel electrodes **114** or the counter electrode **124** includes the metal wires **114m** or the metal wires **124m,** the present invention is not limited thereto. Both of the pixel electrodes **114** and the counter electrode **124** may include the metal wires **114m** and **124m.** With reference to FIG. **4** and FIG. **5****,** a liquid crystal display device **100B** will be described. FIG. **4(a)** shows a schematic diagram of the liquid crystal display device **100B;** FIG. **4(b)** shows a schematic plan view of pixel electrodes **114** of the liquid crystal display device **100B;** and FIG. **4(c)** shows a schematic plan view of a counter electrode **124** of the liquid crystal display device **100B.** In the liquid crystal display device **100B,** the pixel electrodes **114** and the counter electrode **124** respectively include metal wires **114m** and **124m,** such that the direction that the metal wires **114m** of the pixel electrodes **114** extend is orthogonal to the direction that the metal wires **124m** of the counter electrode **124** extend.

The liquid crystal display device **100B** operates in the TN mode, such that orientation azimuth directions of the liquid crystal molecules **132** of the liquid crystal layer **130** are twisted by 90° along the thickness direction of the liquid crystal layer **130,** as shown in FIG. **5****.** As a result, light entering the liquid crystal layer **130** undergoes optical rotation.

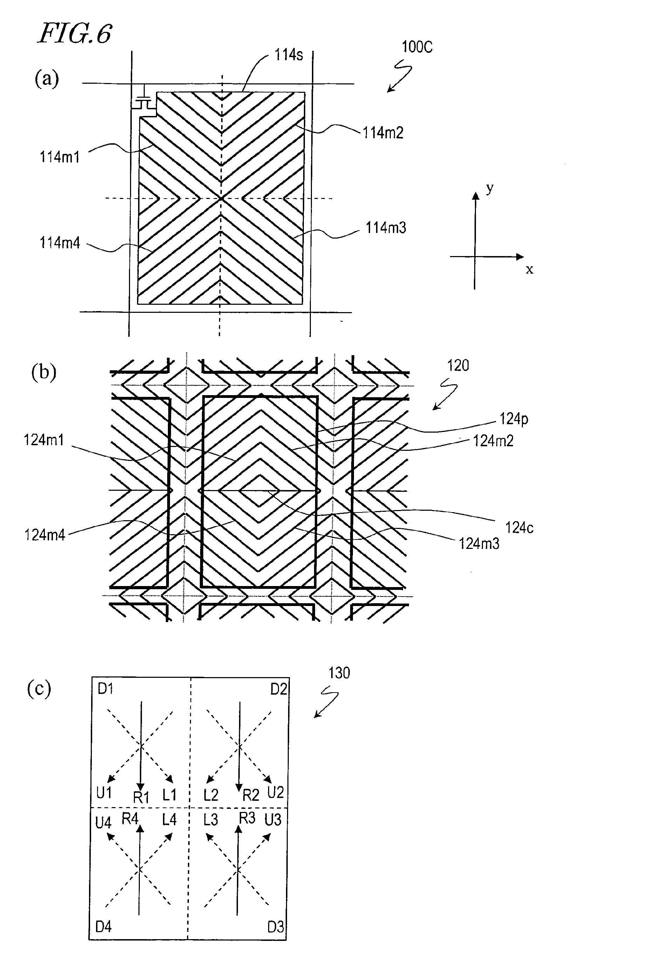

Although the above description illustrates that the metal wires **114m** extend in one direction, the present invention is not limited thereto. The metal wires **114m** may extend in a plurality of directions. With reference to FIG. **6****,** a liquid crystal display device **100C** will be described.

As shown in FIG. **6(a)****,** in the liquid crystal display device **100C,** the metal wires **114m** of a pixel electrode **114** include: metal wires **114m1** extending in parallel to the 135°-315° direction; metal wires **114m2** extending in parallel to the 45°-225° direction; metal wires **114m3** extending in parallel to the 135°-315° direction; and metal wires **114m4** extending in parallel to the 45°-225° direction. The metal wires **114m1** are continuous with the metal wires **114m2** and **114m4,** and the metal wires **114m3** are continuous with the metal wires **114m2** and **114m4.** The pixel electrode **114** further includes an outer edge portion **114s** which is continuous with the metal wires **114m1** to **114m4.**

As shown in FIG. **6(b)****,** the metal wires 124m of the counter electrode **124** include: metal wires **124m1** extending along the 45°-225° direction; metal wires **124m2** extending along the 135°-315° direction; metal wires **124m3** extending along the 45°-225° direction; and metal wires **124m4** extending along the 135°-315° direction. The metal wires **124m1** are continuous with the metal wires **124m2** and **124m4,** and the metal wires **124m3** are continuous with the metal wires **124m2** and **124m4.** The metal wires **124m1** to **124m4** of the counter electrode **124** define rectangular lines surrounding the center of the pixel.

The counter electrode **124** further includes pixel outer edge portions **124p** and a contact portion **124c.** The contact portion **124c** extends along the x direction so as to pass through the center of the pixel. Alternatively, the contact portion **124c** may extend along the y direction so as to pass through the center of the pixel, or extend along both of the x direction and the y direction so as to pass through the center of the pixel. The pixel outer edge portions **124p** and the contact portion **124c** respectively realize electrical connection of the metal wires **124m1** to **124m4.** The metal wires **124m1** to **124m4** of the counter electrode **124** respectively correspond to the metal wires **114m1** to **114m4** of the pixel electrode **114,** such that the metal wires **124m1** to **124m4** extend in directions which are orthogonal to the metal wires **114m1** to **114m4.**

As will be understood from FIG. **6(a)** to FIG. **6(c)****,** in the liquid crystal layer **130** of the liquid crystal display device **100C,** a liquid crystal domain **D1** is formed between the metal wires **114m1** of the pixel electrode **114** and the metal wires **124m1** of the counter electrode **124,** whereas a liquid crystal domain **D2** is formed between the metal wires **114m2** of the pixel electrode **114** and the metal wires **124m2** of the counter electrode **124.** Similarly, in the liquid crystal layer **130,** a liquid crystal domain **D3** is formed between the metal wires **114m3** of the pixel electrode **114** and the metal wires **124m3** of the counter electrode **124,** whereas a liquid crystal domain **D4** is formed between the metal wires **114m4** of the pixel electrode **114** and the metal wires **124m4** of the counter electrode **124.**

Now, the orientation directions of the liquid crystal molecules **132** in the liquid crystal display device **100C** will be discussed. In the present specification, the orientation direction of a liquid crystal molecule in the center of a liquid crystal domain is referred to as a reference orientation direction; and within the reference orientation direction, an azimuth angle component in a direction from the rear face toward the front face and along the major axis of the liquid crystal molecule (i.e., an azimuth angle component obtained by projecting the reference orientation direction onto the principal face of an alignment film) is referred to as a reference orientation azimuth direction. The reference orientation azimuth direction characterizes its corresponding liquid crystal domain, and exerts a predominant influence on the viewing angle characteristics of that liquid crystal domain.

In the liquid crystal layer **130,** the liquid crystal molecules **132** that are closer to the active matrix substrate **110** are oriented toward the neighborhood of the center of the pixel electrode **114,** in accordance with an oblique electric field caused by the outer edge portion **114s.** FIG. **6(c)** shows the orientation azimuth directions of the liquid crystal molecules **132** in the liquid crystal domains **D1** to **D4,** respectively as **L1** to **L4,** that are closer to the active matrix substrate **110.** Note that each of the orientation azimuth directions **L1** to **L4** represents an azimuth angle component in the direction from the rear face toward the front face.

On the other hand, in the liquid crystal layer **130,** the liquid crystal molecules **132** that are closer to the counter substrate **120** are oriented in accordance with oblique electric fields caused by the pixel outer edge portions **124p.** FIG. **6(c)** shows the orientation azimuth directions of the liquid crystal molecules **132** in the liquid crystal domains **D1** to **D4,** respectively as U1 to **U4,** that are closer to the counter substrate **120.** Again, each of the orientation azimuth directions **U1** to **U4** represents an azimuth angle component in the direction from the rear face toward the front face. Herein, since the length of the pixel along the y direction is greater than its length along the x direction, the liquid crystal molecules **132** closer to the counter substrate **120** are oriented so as to have a component heading from the pixel center in the ±x direction.

The reference orientation azimuth directions of the liquid crystal domains **D1** to **D4** are intermediate azimuth directions between the orientation azimuth directions of the liquid crystal molecules **132** closer to the active matrix substrate **110** and the orientation azimuth directions of the liquid crystal molecules **132** closer to the counter substrate **120.** FIG. **6(c)** shows reference orientation azimuth directions **R1** to **R4** corresponding to the liquid crystal domains **D1** to **D4** in the liquid crystal display device **100C.** The reference orientation azimuth directions **R1** and **R2** are set so as to differ by 180° from the reference orientation azimuth directions **R3** and **R4,** thus improving the viewing angle characteristics.

Although the above description illustrates that the liquid crystal display device operates in the TN mode, the present invention is not limited thereto. The liquid crystal display device may operate in the STN (Super Twisted Nematic) mode.

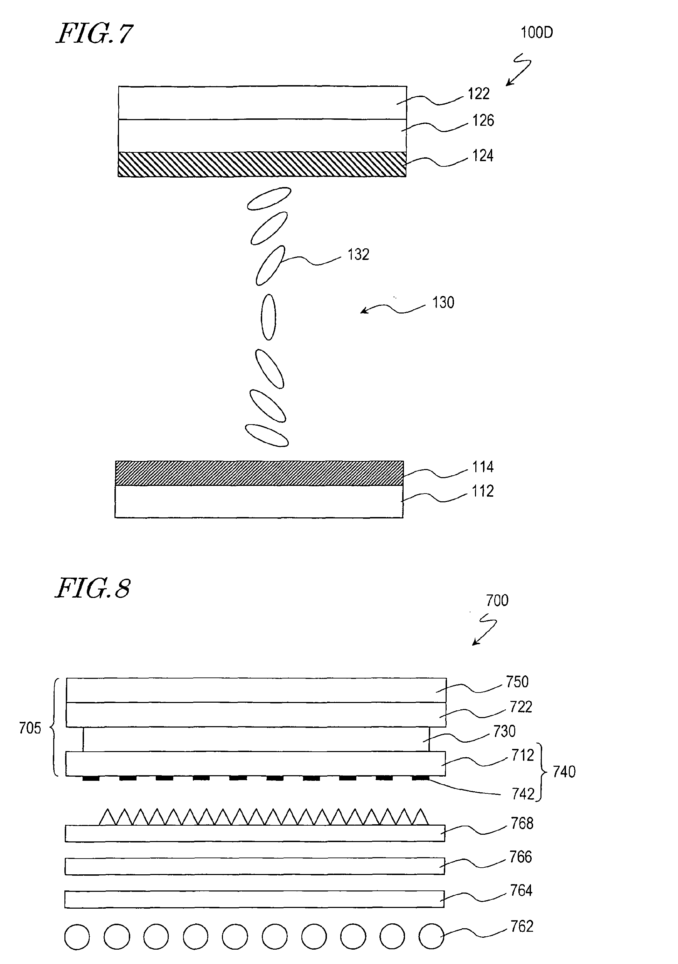

Alternatively, the liquid crystal display device 100D may operate in the OCB (Optically Compensated Birefringence) mode, as shown in FIG. **7****.** In this case, the directions that the metal wires composing the pixel electrodes **114** extend are parallel to the directions that the metal wires composing the counter electrode **124** extend.

As described above, the present invention is applicable to liquid crystal display devices of various modes. However, in order to allow the electrodes to function as a polarizer, it is preferable that no wide slits (e.g., with a width of 2 µm or more) are formed in the electrodes.

Note that the disclosure of Japanese Patent Application No. 2008-211004, which is a base application of the present application, is incorporated in the present specification by reference.

### INDUSTRIAL APPLICABILITY

According to the present invention, a liquid crystal display device which can be easily produced is provided.

### REFERENCE SIGNS LIST

- 100: liquid crystal display device
- 110: active matrix substrate
- 112: insulative substrate
- 114: pixel electrode
- 120: counter substrate
- 122: insulative substrate
- 124: counter electrode

## Claims

1. A liquid crystal display device comprising:
a first substrate having a first electrode;
a second substrate having a second electrode; and
a liquid crystal layer provided between the first electrode and the second electrode, wherein,
at least one of the first electrode and the second electrode includes a plurality of metal wires extending linearly and in parallel to one another.

2. The liquid crystal display device of claim 1, wherein the at least one electrode further includes an outer edge portion which is continuous with each of the plurality of metal wires.

3. The liquid crystal display device of claim 1 or 2, wherein the plurality of metal wires have a pitch of 300 nm or less; a ratio of a width of the plurality of metal wires to the pitch of the plurality of metal wires is in the range from 0.1 to 0.75; and the plurality of metal wires have a height in the range from 50 nm to 500 nm.

4. The liquid crystal display device of any of claims 1 to 3, wherein each of the first electrode and the second electrode includes a plurality of metal wires extending linearly and in parallel to one another.

5. The liquid crystal display device of claim 4, wherein a direction that the plurality of metal wires of the first electrode extend is orthogonal to a direction that the plurality of metal wires of the second electrode extend.
